# EUROPÄISCHE PATENTSCHRIFT

(11) **EP 1 927 277 B1**
(45) Veröffentlichungstag und Bekanntmachung des Hinweises auf die Patenterteilung: **03.03.2010**
(21) Anmeldenummer: 07115792.9
(22) Anmeldetag: 06.09.2007
(51) Int. Cl.: A01D 43/08

(54) **Landwirtschaftliche Erntemaschine mit Überladeeinrichtung**
Agricultural harvester with a transfer device
Moissonneuse agricole dotée d'une goulotte de transfert

(30) Priorität: 30.11.2006 DE 102006056933
(43) Veröffentlichungstag der Anmeldung: 04.06.2008
(73) Patentinhaber: CLAAS Selbstfahrende Erntemaschinen GmbH, 33428 Harsewinkel (DE)
(72) Erfinder: Erdmann, Hubert, 33739 Bielefeld (DE); Tilly, Thomas, 48231 Warendorf (DE); Laing, Reinhard, 33428 Harsewinkel (DE); Schneider, Heinrich, 33428 Harsewinkel (DE); Hohlfeld, Markus, 48431 Rheine (DE); Isfort, Heinrich, 48249 Dülmen (DE); Pollklas, Manfred, 33378 Rheda-Wiedenbrück (DE); Jeppe, Eckehard, 34289 Zierenberg (DE); Strieker, Norbert, 33415 Verl (DE)

(56) Entgegenhaltungen:
- EP-A- 0 070 340
- EP-A- 1 454 520
- US-A- 2 762 517

## Beschreibung

Die Erfindung betrifft eine landwirtschaftliche Erntemaschine mit einer Überladeeinrichtung mit einer Dämpfungsvorrichtung nach dem Oberbegriff des Anspruchs 1.

Landwirtschaftliche Erntemaschinen, insbesondere Feldhäcksler enthalten in der Regel hydraulisch oder elektromotorisch höhenverstellbare u.a. als Auswurfkrümmer bezeichnete Überladeeinrichtungen zur Übergabe des Erntegutes in einen Laderaum eines Begleitfahrzeuges. Aufgrund der Tendenz zu größeren Erntemaschinen mit größeren Erntevorsätzen erfordert dies zwingend eine dementsprechende Verlängerung der Überladeeinrichtungen. Die Position der Überladeeinrichtung am Feldhäcksler ist verstellbar, um den Laderaum des Begleitfahrzeuges möglichst gut treffen und gleichmäßig beladen zu können. Die Überladeeinrichtung ist regelmäßig um die Hochachse drehbar und um eine horizontale Achse verschwenkbar, um die Höhe des Auswurfendes steuern zu können. Regelmäßig ist endseitig an der Überladeeinrichtung eine verschwenkbare Auswurfklappe angebracht um die Richtung des austretenden Erntegutstrahls variieren zu können. Die Positionsveränderungen werden dabei durch fremdkraftbetätigte Aktoren vollzogen, die regelmäßig als Hydraulikzylinder ausgeführt sind.

In der Regel sind solche Überladeeinrichtungen relativ starr gelagert, um starke Horizontalbewegungen während des Überfahrens von Bodenunebenheiten zu vermeiden. Nachteilig, insbesondere aufgrund der Tendenz zu längeren Überladeeinrichtungen, ist es, dass hohe Kräfte auf die Befestigungselemente der Überladeeinrichtung und die Überladeeinrichtung selbst einwirken. Die Verwendung noch belastbarer Materialen ist aufgrund steigender Herstellkosten nicht wünschenswert.

Alternativ ist aus dem Stand der Technik bekannt, solche als Auswurfkrümmer ausgeführte Überladeeinrichtungen hydro-pneumatisch gefedert auszuführen, Zur Federung bzw, Dämpfung der Überladeeinrichtung eines selbstfahrenden Feldhäckslers ist eine permanente hydro-pneumatische Dämpfungsvorrichtung mit einem sog. Stickstoffblasenspeicher vorgesehen, die beim Auftreten von Kräften auf die Überladeeinrichtung deren Dämpfung bewirkt. Als nachteilig an dieser Ausführungsform hat sich erwiesen, dass eine permanente Dämpfung der Überladeeinrichtung mit dessen zunehmender baulicher Länge, insbesondere beim Überfahren von Bodenunebenheiten im Erntebetrieb, die Steuerung des Überladevorgangs des Erntegutes auf das Transportfahrzeug sehr beeinträchtigt. Ein zielgenaues Beladen des Laderaums des nebenherfahrenden Begleitfahrzeugs wird sehr erschwert, so dass ein nicht zu vernachlässigender Ernteverlust eintreten kann.

Demzufolge liegt der Erfindung die Aufgabe zugrunde, die beschriebenen Nachteile des Standes der Technik zu vermeiden und insbesondere eine einstellbare und regelbare Dämpfungsvorrichtung für eine Übenadeeinrichtung zu schaffen, die in Abhängigkeit von bestimmbaren Betriebskriterien einstellbar ist.

Diese Aufgabe wird erfindungsgemäß durch die kennzeichnenden Merkmale des Patentanspruchs 1 gelöst, während in den weiteren Patentansprüchen Merkmale aufgeführt sind, die diese Lösung in vorteilhafter Weise weiterentwickeln.

Indem die Dämpfungsvorrichtung zur Schwingungsdämpfung der Überladeeinrichtung einer landwirtschaftlichen Erntemaschine in Abhängigkeit von vorgegebenen Betriebskriterien einstellbar ist, erfolgt vorteilhaft eine Anpassung der Dämpfung der Überladevorrichtung an unterschiedlichste Einsatzbedingungen, so dass einerseits im Falle des Auftretens von hohen Belastungen an der Überladevorrichtung selbst oder deren Befestigungselementen eine Dämpfung und damit deren Materialschonung erfolgen kann, andererseits beim Überladen von Erntegut auf ein Transportfahrzeug die Dämpfungsvorrichtung zur Erreichung einer hohen Kontrollierbarkeit des Erntegutstrahls sperrbar ist.

Mit der vorgeschlagenen Ausführungsform der Komponenten bedarf es für die Anbindung der hydro-pneumatischen Dämpfung an die Hydraulikanlage der landwirtschaftlichen Erntemaschine vorteilhaft nur eines geringen Herstellungsaufwandes. Die mechanischen und hydro-pneumatischen Komponenten der Dämpfungsvorrichtung, insbesondere der wenigstens eine Hydraulikzylinder, der Druckspeicher und die Ventileinrichtung werden für eine Dämpfung unter maximaler Belastung der Überladeeinrichtung ausgelegt.

In vorteilhafter Weiterbildung der Erfindung ist die sich zwischen dem Druckraum des wenigstens einen Hydraulikzylinders und dem zugehörigen Druckspeicher befindende Ventileinrichtung als Proportionalventil ausgeführt, so dass sich einerseits die Dämpfungsrate der Dämpfungsvorrichtung an den unterschiedlichen Betriebskriterien anpassen, einstellen und/oder regeln oder andererseits die Druckleitung absperren lässt.

Die optimale Einstellung bzw. Sperrung der Dämpfungsvorrichtung zur Beibehaltung eines kontrollierbaren Erntegutstrahls beim Überladen des Erntegutes auf ein Transportfahrzeug bzw. zur Materialschonung der Überladeeinrichtung ist dann erreichbar, wenn die Betriebskriterien in deren Abhängigkeit die Einstellung der Dämpfungsrate bzw. Sperrung der Dämpfungsvorrichtung erfolgt, die Fahrgeschwindigkeit, die Erntegutdurchsatzmenge, die Höhenposition eines zugeordneten Vorsatzgerätes, die Position der Überladevorrichtung, der Betriebszustand der Häckseltrommel sind, denn insbesondere anhand dieser Betriebskriterien sind Rückschlüsse auf die Belastung der Überladeeinrichtung ziehbar.

Im einfachsten Fall bleibt die Dämpfungsvorrichtung abgeschaltet, wenn die Überladeeinrichtung Erntegut befördert und wird zugeschaltet und bewirkt dann eine Schwingungsdämpfung der Überladeeinrichtung, wenn die Überladeeinrichtung kein Erntegut befördert, so dass einerseits sichergestellt ist, dass während des Erntevorgangs eine Dämpfung unterbleibt, um ein kontrolliertes Überladen auf das Transportfahrzeug zu gewährleisten und andererseits beispielhaft beim Wenden der landwirtschaftlichen Erntemaschine oder beim Wechsel von einem Erntefeld zu einem anderen sichergestellt ist, dass die auf die Überladeeinrichtung einwirkenden Schwingungen, zur Materialschonung, gedämpft werden.

In einer vorteilhaften Weiterbildung der Erfindung ist eine Auswerte- und Steuereinrichtung zur Steuerung der Dämpfungsvorrichtung vorhanden, wobei mittels über die Auswerte- und Steuereinrichtung das Zu- und Abschalten bzw. die Einstellung der Dämpfungsrate der Dämpfungsvorrichtung in Abhängigkeit der Betriebskriterien vornehmbar ist. Im einfachsten Fall erfolgt das Zu- und Abschalten der Dämpfungsvorrichtung bzw. die Einstellung der Dämpfungsrate der Dämpfungsvorrichtung manuell vom Bediener der landwirtschaftlichen Erntemaschine oder automatisch mittels einer elektronischen Steuerung.

Indem die landwirtschaftliche Erntemaschine geeignete Mittel zur Ermittlung der Betriebskriterien umfasst, wobei die Mittel als Sensoren ausgebildet sind, die Signale bereitstellen, kann in deren Abhängigkeit die Einstellung der Dämpfungsvorrichtung vorgenommen werden.

Besonders praktisch erweist es sich, diesen Prozess zur Aktivierung der Dämpfungsvorrichtung in ein vorhandenes elektronisches Vorgewende-Management-System, auch als Headland-Management-System bekannt, zu integrieren, wobei das aktive Vorgewende-Management-System die Dämpfungsvorrichtung, während die Erntemaschine das Vorgewende und/oder das Feldende durchfährt, automatisch aktiviert und die Dämpfungsrate einstellt, so dass die insbesondere dort auftretenden Belastungen für die Überladeeinrichtung, bedingt durch das Überqueren von Bodenunebenheiten, gedämpft werden.

In einer einfachen Ausführungsform der Erfindung weist die Überladeeinrichtung zum Sensieren der Belastung einen Belastungssensor auf, vorzugsweise ist dabei der Belastungssensor als Kraftmessbolzen ausgeführt. so dass permanent die tatsächliche Belastung der Überladeeinrichtung bzw. der Befestigungselemente der Überladeeinrichtung ermittelbar ist.

Dadurch, dass die landwirtschaftliche Erntemaschine eine Fahrerkabine mit einer Anzeigeneinheit umfasst, wobei der jeweilige Status der Dämpfungsvorrichtung - aktiv oder ~ inaktiv, sowie die jeweilige Dämpfungsrate auf der Anzeigeneinheit visualisierbar sind, ist der Fahrer stets über die Umschaltung zwischen gedämpfter und ungedämpfter Überladeeinrichtung informiert. Solche Umschaltungen während des Erntebetriebes nimmt der Bediener oftmals nicht bewusst wahr.

Anstelle einer einstellbaren Dämpfungsvorrichtung für die Überladeeinrichtung eines Feldhäckslers, können auch andere Erntemaschinen wie Mähdrescher, Kartoffelernter oder Zückerrübenroder und deren Überladeeinrichtungen wie das Auslaufrohr des Mähdreschers oder das Übergabeband des Kartoffelroders bzw. des Zuckerrübenroders mit einer anhand von vorgegebenen Betriebskriterien einstellbaren Dämpfungsvorrichtung ausgestattet sein.

Weitere vorteilhafte Ausgestaltungen sind Gegenstand weiterer Unteransprüche und werden anhand der nachfolgenden Zeichnung näher erläutert.

Es zeigt:

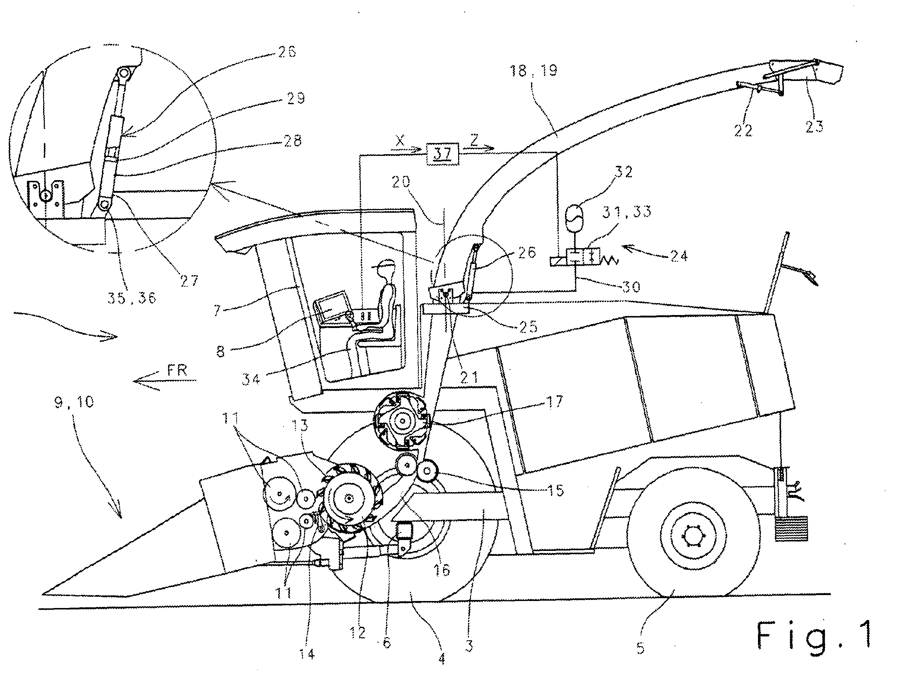

Figur 1: eine schematische Seitenansicht eines Feldhäckslers mit einer nach hinten geschwenkten Überladeeinrichtung

Figur 1 zeigt eine als selbstfahrender Feldhäcksler 1 ausgeführte landwirtschaftliche Erntemaschine 2 in Seitenansicht und Schnittdarstellung, Die Erntemaschine 2 baut sich auf einem Rahmen 3 auf, der von angetriebenen vorderen Rädern 4 und lenkbaren rückwärtigen Rädern 5 getragen wird. Die Bedienung der landwirtschaftlichen Erntemaschine 2 erfolgt durch die sich oberhalb der Frontachse 6 befindenden Fahrerkabine 7. Die Fahrerkabine 7 umfasst eine Anzeigeneinheit 8 zur Visualisierung von Betriebs- und Maschineninformationen. Fronseitig in Fahrtrichtung FR gesehen ist dem Feldhäcksler 1 eine Erntegutaufnahmevorrichtung 9 zugeordnet, im Ausführungsbeispiel ein Maisgebiss 10, welches im Arbeitsbetrieb hier nicht dargestelltes Erntegut aufnimmt, gegebenenfalls zerkleinert und den nachfolgenden Einzugs- und Vorpresswalzen 11 zuführt. Die Einzugs- und Vorpresswalzen 11 leiten das Erntegut der nachgeordneten und rotierenden Häckseltrommel 12 zu, deren umlaufenden Häckselmesser 13 das Erntegut an einer Gegenschneide 14 zerkleinern, Das zerkleinerte Erntegut wird sodann an eine Nachzerkleinerungseinrichtung 15 übergeben, die die Erntegutkörner, wie beispielsweise Mais, anschlägt und über einen Förderschacht 16 an einen Nachbeschleuniger 17 übergibt. Der Nachbeschleuniger 17 beschleunigt das zerkleinerte Erntegut und fördert es über eine, hier als Auswurfkrümmer 18 bezeichnete Überladeeinrichtung 19 an ein hier nicht dargestelltes Transportfahrzeug. Der Auswurfkrümmer 18 weist den Querschnitt eines umgekehrten größtenteils nach unten hin geöffneten U's auf, dies ist bedingt durch die auf das Erntegut einwirkende Zentrifugalkraft, welche das auszubringende Erntegut entlang der obenseitigen Fläche des Auswurfkrümmers 18 befördert, wobei die Seitenwände die seitliche Führung des Erntegutes bewirken. Der Auswurfkrümmer 18 ist um eine vertikale Achse 20 und zur Veränderung der Höhenstellung um eine horizontale Achse 21 verschwenkbar in üblicher Weise direkt hinter der Fahrerkabine 7 des Feldhäckslers 1 auf einem Befestigungssockel 25 angeordnet. Am auswurfseitigen Ende des Auswurfkrümmers 18 befindet sich eine über einen Hydraulikzylinder 22 verstellbare Auswurfklappe 23. Mittels Stellung der Auswurfklappe 23 kann die Wurfweite, d.h. der Abstand zwischen dem am Feldhäcksler 1 befindlichen, eingangsseitigen Ende des Auswurfkrümmers 18 und dem Auftreffpunkt des Gutstroms auf dem Transportfahrzeug, gesteuert werden, Wird die Auswurfklappe 23 nach unten geschwenkt, so ist die Wurfweite bei gleichbleibender Höheneinstellung des Auswurfkrümmers 18 geringer als bei einer nach oben geschwenkten Auswurfklappe 23.

Bislang war es bekannt einerseits solche Überladeeinrichtungen 19 starr zu lagern. Aufgrund der Tendenz zu längeren Überladeeinrichtungen 19, wirkt sich dies jedoch besonders nachteilig aus, wenn hohe Kräfte auf die Befestigungselemente der Überladeeinrichtung 19 und die Überladeeinrichtung 19 selbst einwirken. Alternativ aus dem Stand der Technik ist es daher bekannt, die Überladeeinrichtung 19 mittels einer Dämpfungsvorrichtung 24 permanent zu dämpfen bzw, zu federn, um die Überladeeinrichtung 19 selbst oder ihre Befestigungselemente vor starken Belastungen zu schützen, Als nachteilig an dieser Ausführungsform hat sich erwiesen, dass eine permanente Dämpfung der Überladeeinrichtung 19 mit deren zunehmender baulicher Länge im Erntebetrieb, insbesondere beim Überfahren von Bodenunebenheiten, die Steuerung des Überladevorgangs des Erntegutes auf ein hier nicht dargestelltes Transportfahrzeug sehr beeinträchtigt. Ein zielgenaues Beladen des Laderaums des Transportfahrzeuges wird sehr erschwert, so dass ein nicht zu vernachlässigender Ernteverlust eintreten kann.

Erfindungsgemäß ist nun die sich zwischen der Überladeeinrichtung 19 und dem Befestigungssockel 25 befindende Dämpfungsvorrichtung 24 in Abhängigkeit von vorgegebenen Betriebskriterien der landwirtschaftlichen Erntemaschine 2 einstellbar, so dass einerseits im Falle des Auftretens von hohen Belastungen an der Überladevorrichtung selbst oder deren hier nicht näher dargestellten Befestigungselemente eine Dämpfung und damit deren Materialschonung erfolgen kann. Andererseits kann beim Überladen von Erntegut auf ein Transportfahrzeug die Dämpfungsvorrichtung 24 zur Erreichung einer hohen Kontrollierbarkeit des Erntegutstrahls gesperrt werden. Die Dämpfungsvorrichtung 24 ist dabei als einfach wirkender Hydraulikzylinder 26 ausgeführt, der mit einem Ende gelenkig an der Überladeeinrichtung 19 und mit dem anderen Ende gelenkig am Befestigungssockel 25 der Überladeeinrichtung 19 befestigt ist. In einer anderen Ausführungsform könnte er auch doppeltwirkend ausgeführt sein. Der Hydraulikzylinder 26 weist einen im Zylindergehäuse 27 liegenden Druckraum 28 auf, in dem ein Kolben 29 längsverschiebbar geführt ist. Der Druckraum 28 ist über eine Druckleitung 30 mit einer Ventileinrichtung 31, mit einem Druckspeicher 32 verbunden ist. Die Dämpfungswirkung wird durch den Druckspeicher 32 erreicht. Bei dem Druckspeicher 32 handelt es sich um einen Stickstoffgasdruckspeicher bekannter Bauart, der ein Teilvolumen des Druckraums 28 bei Bewegung des Hydraulikzylinders 26 aufnimmt, wobei der Druckspeicher 32 eine Druckvorspannung aufweist. Im Ausführungsbeispiel ist die als Proportionalventil 33 ausgeführte Ventileinrichtung 31 durch eine elektrische oder elektronische Auswerte- und Steuereinrichtung 37 ansteuerbar. Mittels an sich bekannter und hier nicht näher dargestellter Sensoren empfängt die Auswerte- und Steuereinrichtung Signale X der Fahrgeschwindigkeit, der Höhenposition des Vorsatzgerätes, der Erntegutdurchsatzmenge, der Position der Überladeeinrichtung 19, sowie des Betriebszustandes der Häckseltrommel 12 der landwirtschaftlichen Erntemaschine 2. Die erfassten Signale X werden der Auswerte- und Steuereinrichtung 37 zur Auswertung zugeleitet. Insbesondere anhand der genannten Signale X lassen sich differenzierte Rückschlüsse auf die einwirkenden Kräfte und Belastungen auf die Überladeeinrichtung 19 ableiten. Im Fall, dass Erntegut geerntet bzw. befördert wird und dies anhand der Sensoren sensiert wird, werden dann entsprechende Signale X and die Auswerte- und Steuereinrichtung 37 übermittelt. Die Steuer- und Auswerteeinrichtung 37 wertet die Signale X aus und generiert ein Signal Z. Entsprechend dem Signal Z wird mittels des Proportionalventils 33 die Druckleitung zwischen dem Hydraulikzylinder 22 und dem Druckspeicher 32 gesperrt, um ein Dämpfen bzw. Abfedern der Überladeeinrichtung 19 zu verhindern, damit ein kontrollierbarer Überladevorgang des Erntegutes auf das Transportfahrzeug gewährleistbar ist. Wird dagegen kein Erntegut befördert, öffnet das Proportionalventil 33 die Druckleitung 30, so dass eine Dämpfung der Überladeeinrichtung 19 erfolgt, Die Ermittlung der Dämpfungsrate erfolgt anhand der Auswertung der erfassten Signale X der oben genannten Sensoren, wobei die Einstellung der Dämpfungsvorrichtung 24 durch Drosselung des Ölaustauschs zwischen dem Hydraulikzylinder 22 und dem Druckspeicher 32 durch das Proportionalventil 33 bewirkt wird. Denkbar ist zudem, dass das Zu- bzw. Abschalten der Dämpfungsvorrichtung 24 bzw. die Einstellung der Dämpfungsrate manuell vom Bediener 34 der landwirtschaftlichen Erntemaschine 2 vorgenommen oder automatisch von der elektrischen oder elektronischen Auswerte- und Steuereinrichtung 37 übernommen wird. In einer weiteren Ausführungsform ist der Prozess zur Aktivierung der Dämpfungsvorrichtung 24 in ein hier nicht dargestelltes elektronisches Vorgewende-Management-System integriert, wobei das elektronische Vorgewende-Management-System die Dampfungsvorrichtung 24 aktiviert und einstellt. Alternativ oder zusätzlich kann die Belastung der Überladevorrichtung 19 über einen als Kraftmessbolzen 35 ausgeführten Belastungssensor36 sensiert werden, wobei anhand der sensierten Belastung die Aktivierung bzw, Einstellung der Dämpfungsvorrichtung 24 erfolgt. Die der Fahrerkabine 7 vorhandene Anzeigeneinheit 8 visualisiert dem Bediener den jeweiligen Status der Dampfungsvorrichtung 19 - aktiv oder inaktiv ~, sowie die jeweilige Dämpfungsrate, so dass der Bediener 34 der landwirtschaftlichen Erntemaschine 2 permanent über den Dämpfungsstatus informiert ist.

Auch wenn die Erfindung lediglich anhand eines Ausführungsbeispiels beschrieben wurde, erschließen sich dem Fachmann im Lichte der vorstehenden Beschreibung sowie der Zeichnung viele verschiedenartige Alternativen, Modifikationen und Varianten, die unter die Erfindung fallen. Des weiteren ist die Erfindung nicht ausschließlich für selbstfahrende Feldhäcksler 1 bestimmt. Auch andere landwirtschaftliche Erntemaschinen 2 wie Mähdrescher mit Auslaufrohr oder Kartoffelernter bzw. Zuckerrübenroder jeweils mit einem Übergabeband können mit einer solchen in Abhängigkeit von Betriebskriterien einstellbaren Dämpfungsvorrichtung 24 ausgerüstet sein.

### Bezugszeichenliste

- 1: selbstfahrender Feldhäcksler
- 2: landwirtschaftliche Erntemaschine
- 3: Rahmen
- 4: vordere Räder
- 5: rückwärtige Räder
- 6: Frontachse
- 7: Fahrerkabine
- 8: Anzeigeneinheit
- 9: Erntegutzuführvorrichtung
- 10: Maisgebiss
- 11: Einzugs- und Vorpresswalzen
- 12: Häckseltrommel
- 13: Häckselmesser
- 14: Gegenschneide
- 15: Nachzerkleinerungseinrichtung
- 16: Förderschacht
- 17: Nachbeschleuniger
- 18: Auswurfkrümmer
- 19: Überladeeinrichtung
- 20: vertikale Achse
- 21: horizontale Achse
- 22: Hydraulikzylinder
- 23: Auswurfklappe
- 24: Dämpfungsvorrichtung
- 25: Befestigungssockel
- 26: Hydraulikzylinder
- 27: Zylindergehäuse
- 28: Druckraum
- 29: Kolben
- 30: Druckleitung
- 31: Ventileinrichtung
- 32: Druckspeicher
- 33: Proportionalventil
- 34: Bediener
- 35: Kraftmessbolzen
- 36: Belastungssensor
- 37: Auswerte~ und Steuereinrichtung

## Patentansprüche

1. Landwirtschaftliche Erntemaschine (2), insbesondere ein selbstfahrender Feldhäcksler (1) zum Aufnehmen und Bearbeiten von Erntegut mit einer Einzugs- und Häckseleinrichtungen nachfolgenden, um eine horizontale und vertikale Achse (20, 21) verschwenkbaren Übertadeeinrichtung (19) zum Überladen des Erntegutes, mit wenigstens einer zwischen der Fahrzeugkarosse und der Überladeeinrichtung (19) angeordneten Dämpfungsvorrichtung (24) zur Schwingungsdämpfung der Überladeeinrichtung (19),
**dadurch gekennzeichnet,**
**dass** die Dämpfungsvorrichtung (24) zur Schwingungsdämpfung der Überladeeinrichtung (19) in Abhängigkeit von vorgegebenen Betriebskriterien der landwirtschaftlichen Erntemaschine (2) einstellbar ist.

2. Landwirtschaftliche Erntemaschine (2) nach Anspruch 1,
**dadurch gekennzeichnet,**
**dass** die wenigstens eine Dämpfungsvorrichtung (24) als hydropneumatische Dämpfung mit wenigstens einem an einen Druckspeicher (32) angeschossene Hydraulikzylinder (26) ausgebildet ist, wobei dessen Druckraum (28) mittels einer Ventileinrichtung (31) durch Absperrung der Verbindung zwischen Hydraulikzylinder (26) und Druckspeicher (32) blockierbar ist.

3. Landwirtschaftliche Erntemaschine (2) nach Anspruch 2,
**dadurch gekennzeichnet,**
**dass** zwischen dem Druckraum (28) des wenigstens einen Hydraulikzylinder (26) und dem zugehörigen Druckspeicher (32) vorhandene Ventileinrichtung (31) als Proportionalventil (33) ausgebildet ist.

4. Landwirtschaftliche Erntemaschine (2) nach einem der Ansprüche 1 bis 3,
**dadurch gekennzeichnet,**
**dass** die Betriebskriterien in dessen Abhängigkeit die Aktivierung bzw. Sperrung der Dämpfungsvorrichtung (24) erfolgt, die Fahrgeschwindigkeit, die Erntegutdurchsatzmenge, die Höhenposition eines zugeordneten Vorsatzgerätes, die Position der Überladevorrichtung (19), der Betriebszustand der Häckseltrommel (12) sein können.

5. Landwirtschafttiche Erntemaschine (2) nach einem der Ansprüche 1 bis 4,
**dadurch gekennzeichnet,**
**dass** die Dämpfungsvorrichtung (24) vorzugsweise inaktiv ist, wenn die Überladeeinrichtung (19) Erntegut befördert und vorzugsweise dann eine Dämpfung der Überladeeinrichtung (19) bewirkt, wenn die Überladeeinrichtung (19) kein Erntegut befördert.

6. Landwirtschaftliche Erntemaschine (2) nach einem der Ansprüche 1 bis 5,
**dadurch gekennzeichnet,**
**dass** eine Auswerte- und Steuereinrichtung (37) zur Steuerung der Dämpfungsvorrichtung (24) vorhanden ist, wobei die Auswerte- und Steuereinrichtung (37) das Zu- und Abschalten der Dämpfungsvorrichtung (24) bzw. die Einstellung der Dämpfungsrate der Dämpfungsvorrichtung (24) in Abhängigkeit von den vorgegebenen Betriebskriterien steuert.

7. Landwirtschaftliche Erntemaschine (2) nach einem der Ansprüche 1 bis 6,
**dadurch gekennzeichnet,**
**dass** das Zu- bzw. Abschalten der Dämpfungsvorrichtung (24) bzw. die Einstellung der Dämpfungsrate manuell vom Bediener (34) der landwirtschaftlichen Erntemaschine (2) vorgenommen oder automatisch von einer elektrischen oder elektronischen Auswerte- und Steuereinrichtung (37) übernommen wird.

8. Landwirtschaftliche Erntemaschine (2) nach einem der Ansprüche 1 bis 7,
**dadurch gekennzeichnet,**
**dass** die landwirtschaftliche Erntemaschine (2) geeignete Mittel zur Ermittlung der Betriebskriterien umfasst, wobei die Mittel als Sensoren ausgebildet sind, die Signale X bereitstellen, in deren Abhängigkeit die Steuerung der Dämpfungsvorrichtung (24) vornehmbar ist.

9. Landwirtschaftliche Erntemaschine (2) nach einem der Ansprüche 1 bis 8,
**dadurch gekennzeichnet,**
**dass** der Prozess zur Aktivierung und Steuerung der Dämpfungsvorrichtung (24) in ein elektronisches Vorgewende-Management-System integriert ist und wobei das elektronische Vorgewende-Management-System die Dämpfungsvorrichtung (24) aktiviert und einstellt.

10. Landwirtschaftliche Erntemaschine (24) nach einem der Ansprüche 1 bis 9,
**dadurch gekennzeichnet,**
**dass** der Überladeeinrichtung (24) zum Sensieren der Belastung ein Belastungssensor (36) zugeordnet ist.

11. Landwirtschaftliche Erntemaschine (2) nach einem der Ansprüche 1 bis 10,
**dadurch gekennzeichnet,**
**dass** der Belastungssensor (36) als Kraftmessbolzen (35) ausgeführt ist.

12. Landwirtschaftliche Erntemaschine (2) nach einem der Ansprüche 1 bis 11,
**dadurch gekennzeichnet,**
**dass** die landwirtschaftliche Erntemaschine (2) eine Fahrerkabine (7) mit einer Anzeigeneinheit (8) umfasst, wobei der jeweilige Status der Dämpfungsvorrichtung (24) aktiv bzw. inaktiv -, sowie die jeweilige Dämpfungsrate auf der Anzeigeneinheit (8) visualisierbar ist.

13. Landwirtschaftliche Erntemaschine (2) nach einem der Ansprüche 1 bis 12,
**dadurch gekennzeichnet,**
**dass** die landwirtschaftliche Erntemaschine (2) als Mähdrescher oder Kartoffelernter oder Zückerrübenroder und die Überladeeinrichtung (19) als Auslaufrohr oder als Übergabeband ausgeführt ist.

## Claims

1. An agricultural harvesting machine (2), in particular a self-propelled forage harvester for picking up and processing crop material comprising a transloading device (19) for transloading the crop material, which follows intake and chopping devices and is pivotable about horizontal and vertical axes (20, 21), with at least one damping device (24) arranged between the vehicle body and the transloading device (19) for oscillation damping of the transloading device (19),
**characterised in that** the damping device (24) for oscillation damping of the transloading device (19) is adjustable in dependence on predetermined operating criteria of the agricultural harvesting machine (2).

2. An agricultural harvesting machine (2) according to claim 1 **characterised in that** the at least one damping device (24) is in the form of hydropneumatic damping means with at least one hydraulic cylinder (26) connected to a pressure storage means (32), wherein its pressure chamber (28) can be blocked by means of a valve device (31) by closing off the communication between the hydraulic cylinder (26) and the pressure storage means (32).

3. An agricultural harvesting machine (2) according to claim 2 **characterised in that** the valve device (31) between the pressure chamber (28) of the at least one hydraulic cylinder (26) and the associated pressure storage means (32) is in the form of a proportional valve (33).

4. An agricultural harvesting machine (2) according to one of claims 1 to 3 **characterised in that** the operating criteria, in dependence on which activation or locking of the damping device (24) is effected, can be the travel speed, the crop material throughput amount, the height position of an associated front-mounted implement, the position of the transloading device (19) and the operating condition of the chopper drum (12).

5. An agricultural harvesting machine (2) according to one of claims 1 to 4 **characterised in that** the damping device (24) is preferably inactive when the transloading device (19) conveys crop material and preferably causes damping of the transloading device (19) when the transloading device (19) conveys no crop material.

6. An agricultural harvesting machine (2) according to one of claims 1 to 5 **characterised in that** there is an evaluation and control device (37) for controlling the damping device (24), wherein the evaluation and control device (37) controls switching the damping device (24) on and off or the setting of the damping rate of the damping device (24) in dependence on the predetermined operating criteria.

7. An agricultural harvesting machine (2) according to one of claims 1 to 6 **characterised in that** switching the damping device (24) on and off or setting of the damping rate is effected manually by the operator (34) of the agricultural harvesting machine (2) or is implemented automatically by an electrical or electronic evaluation and control device (37).

8. An agricultural harvesting machine (2) according to one of claims 1 to 7 **characterised in that** the agricultural harvesting machine (2) includes suitable means for ascertaining the operating criteria, the means being in the form of sensors which provide signals X, in dependence on which control of the damping device (24) can be effected.

9. An agricultural harvesting machine (2) according to one of claims 1 to 8 **characterised in that** the process for activation and control of the damping device (24) is integrated into an electronic headland management system and wherein the electronic headland management system activates and sets the damping device (24).

10. An agricultural harvesting machine (2) according to one of claims 1 to 9 **characterised in that** a loading sensor (36) is associated with the transloading device (24) for sensing the loading.

11. An agricultural harvesting machine (2) according to one of claims 1 to 10 **characterised in that** the loading sensor (36) is in the form of a force-measuring bolt (35).

12. An agricultural harvesting machine (2) according to one of claims 1 to 11 **characterised in that** the agricultural harvesting machine (2) includes a driving cab (7) with a display unit (8), wherein the respective status of the damping device (24) - active or inactive - and the respective damping rate can be displayed on the display unit (8).

13. An agricultural harvesting machine (2) according to one of claims 1 to 12 **characterised in that** the agricultural harvesting machine (2) is in the form of a combine harvester, a potato harvester or a sugar beet lifter, and the transloading device (19) is in the form of a discharge tube or a transfer belt.

## Revendications

1. Moissonneuse agricole (2), en particulier ensileuse automotrice (1) destinée à ramasser et à traiter les produits récoltés avec un dispositif de transfert (19) placé en aval des dispositifs d'alimentation et de hachage, basculant autour d'un axe horizontal et vertical (20, 21) et servant à transférer les produits récoltés, avec au moins un dispositif amortisseur (24) agencé entre la caisse du véhicule et le dispositif de transfert (19) servant à amortir les vibrations du dispositif de transfert (19),
**caractérisée en ce que**
le dispositif amortisseur (24) servant à amortir les vibrations du dispositif de transfert (19) est réglable en fonction de critères de fonctionnement prédéfinis de la moissonneuse agricole (2).

2. Moissonneuse agricole (2) selon la revendication 1,
**caractérisée en ce que**
l'au moins un dispositif amortisseur (24) est réalisé sous forme d'amortisseur hydropneumatique avec au moins un vérin hydraulique (26) raccordé à un accumulateur de pression (32), la chambre de pression (28) du vérin pouvant être bloquée au moyen d'un ensemble soupape (31) en coupant la liaison entre le vérin hydraulique (26) et l'accumulateur de pression (32).

3. Moissonneuse agricole (2) selon la revendication 2,
**caractérisée en ce que**
l'ensemble soupape (31) présent entre la chambre de pression (28) de l'au moins un vérin hydraulique (26) et l'accumulateur de pression (32) associé est réalisé sous forme de soupape proportionnelle (33).

4. Moissonneuse agricole (2) selon l'une quelconque des revendications 1 à 3,
**caractérisée en ce que**
les critères de fonctionnement en fonction desquels le dispositif amortisseur (24) est activé respectivement bloqué peuvent être la vitesse de déplacement, le débit de récolte, la position en hauteur d'un outil frontal associé, la position du dispositif de transfert (19), l'état de fonctionnement du tambour de hachage (12).

5. Moissonneuse agricole (2) selon l'une quelconque des revendications 1 à 4,
**caractérisée en ce que**
le dispositif amortisseur (24) est de préférence inactif, lorsque le dispositif de transfert (19) transporte les produits récoltés et entraîne un amortissement du dispositif de transfert (19) de préférence lorsque le dispositif de transfert (19) ne transporte pas de produits récoltés.

6. Moissonneuse agricole (2) selon l'une quelconque des revendications 1 à 5,
**caractérisée en ce que**
il y a une unité d'évaluation et de commande (37) servant à commander le dispositif amortisseur (24), l'unité d'évaluation et de commande (37) commandant la mise en et hors circuit du dispositif amortisseur (24) respectivement le réglage du taux d'amortissement du dispositif amortisseur (24) en fonction des critères de fonctionnement prédéfinis.

7. Moissonneuse agricole (2) selon l'une quelconque des revendications 1 à 6,
**caractérisée en ce que**
la mise en respectivement hors circuit du dispositif amortisseur (24) respectivement le réglage du taux d'amortissement est réalisée manuellement par l'opérateur (34) de la moissonneuse agricole (2) ou prise en charge automatiquement par une unité d'évaluation et de commande (37) électrique ou électronique.

8. Moissonneuse agricole (2) selon l'une quelconque des revendications 1 à 7,
**caractérisée en ce que**
la moissonneuse agricole (2) comprend des moyens appropriés de détermination des critères de fonctionnement, les moyens étant réalisés sous forme de capteurs qui mettent à disposition des signaux X en fonction desquels il est possible de procéder à la commande du dispositif amortisseur (24).

9. Moissonneuse agricole (2) selon l'une quelconque des revendications 1 à 8,
**caractérisée en ce que**
le processus d'activation et de commande du dispositif amortisseur (24) est intégré dans un système électronique de gestion en bout de champ et le système électronique de gestion en bout de champ activant et réglant le dispositif amortisseur (24).

10. Moissonneuse agricole (24) selon l'une quelconque des revendications 1 à 9,
**caractérisée en ce que**
un capteur de charge (36) est affecté au dispositif de transfert (24) pour détecter la charge.

11. Moissonneuse agricole (2) selon l'une quelconque des revendications 1 à 10,
**caractérisée en ce que**
le capteur de charge (36) est réalisé sous forme de boulon dynamométrique (35).

12. Moissonneuse agricole (2) selon l'une quelconque des revendications 1 à 11,
**caractérisée en ce que**
la moissonneuse agricole (2) comprend une cabine de conduite (7) avec une unité d'affichage (8), l'état respectif du dispositif amortisseur (24), actif ou inactif, ainsi que le taux d'amortissement respectif peuvent être visualisés sur l'unité d'affichage (8).

13. Moissonneuse agricole (2) selon l'une quelconque des revendications 1 à 12,
**caractérisée en ce que**
la moissonneuse agricole (2) est réalisée sous forme de moissonneuse-batteuse ou d'arracheuse de pommes de terre ou d'arracheuse de betteraves sucrières et le dispositif de transfert (19) est réalisé sous forme de goulotte d'éjection ou de bande de transfert.
